# EUROPÄISCHE PATENTSCHRIFT

(11) **EP 1 284 903 B1**
(45) Veröffentlichungstag und Bekanntmachung des Hinweises auf die Patenterteilung: **12.01.2005**
(21) Anmeldenummer: 01923565.4
(22) Anmeldetag: 10.02.2001
(51) Int. Cl.: B64D 15/12, F03D 1/06, B63B 59/00, H05B 6/80

(54) **KOMPAKTES MILLIMETERWELLENTECHNISCHES SYSTEM ZUM ENTEISEN UND/ODER VORBEUGEN EINER VEREISUNG DER ÄUSSEREN OBERFLÄCHE VON METEOROLOGISCHEN EINFLÜSSEN AUSGESETZTEN HOHLRAUM- ODER SCHALENSTRUKTUREN**
COMPACT MILLIMETER WAVE TECHNICAL SYSTEM FOR DE-ICING AND/OR PREVENTING THE FORMATION OF ICE ON THE OUTER SURFACE OF HOLLOW OR SHELL STRUCTURES EXPOSED TO METEOROLOGICAL INFLUENCES
SYSTEME COMPACT RELEVANT DE LA TECHNIQUE DES ONDES MILLIMETRIQUES POUR DEGIVRER ET/OU PREVENIR LA FORMATION DE GIVRE SUR LA SURFACE EXTERIEURE DE STRUCTURES CREUSES OU CUPULIFORMES EXPOSEES AUX INFLUENCES METEOROLOGIQUES

(30) Priorität: 03.04.2000 DE 10016259
(43) Veröffentlichungstag der Anmeldung: 26.02.2003
(73) Patentinhaber: Forschungszentrum Karlsruhe GmbH, 76133 Karlsruhe (DE)
(72) Erfinder: FEHER, Lambert, 76351 Linkenhei-Hochstetten (DE)
(74) Vertreter: Rückert, Friedrich, Dr.
(86) Internationale Anmeldenummer: PCT/EP2001/001484
(87) Internationale Veröffentlichungsnummer: WO 2001/074662

(56) Entgegenhaltungen:
- WO-A-98/01340
- DE-A- 19 750 198
- US-A- 5 615 849
- US-A- 5 623 821

## Beschreibung

Die Erfindung betrifft ein Millimeterwellensystem zum Enteisen von vereisungsgefährdeten Fronten an hohlraumbildenden Strukturen, die durch Luftanströmung meteorologischen Einflüssen ausgesetzt sind.

Der Ansatz von Eis an solchen Strukturen beeinträchtigt das Umströmungsverhalten der Luft empfindlich, was insbesondere in der Luftfahrt zu aerodynamisch problematischem Fehlverhalten führen kann.

Die Anstrengungen, die vereisungsgefährdete Fronten an solchen Strukturen eisfrei zu halten, sind mannigfaltig. Sie reichen vom Besprühen oder Bespülen der exponierten Oberflächen solcher Fronten mit einer die Eisbildung hemmenden Flüssigkeit, über das Anströmen der Innenflächen mit Warmluft bis zum ohmschen Beheizen solcher Zonen, elektrische Enteisungssysteme. Flüssigkeitsenteisung ist durch sein Reservoir an Flüssigkeit begrenzt und gilt zudem als unzuverlässig.

Die Bedingungen zur Eisbildung müssen unterdrückt werden. Das gelingt beim Enteisen mittels Flüssigkeit nur vorübergehend, insbesondere beim Verwenden von Enteisungsflüssigkeit am Boden vor dem Start. Der anhaftende Film reißt schon während der Startphase ab und lässt beim Durchgang des Flugzeugs durch vereisungsgefährdete Wolkenformationen ein nur zeitlich kurzes Sicherheitsfenster zu. Regen z.B. spült ein solches Mittel je nach Stärke am Boden früher oder später schon ab.

In der Luftfahrt ist gängige Technik im Flug, Tragflächen bzw. die aerodynamisch wichtigen Vorflügel (engl.: slat), bzw. die exponierten Fronten, Flügelnasen, dieser Bereiche mit von den Triebwerken entnommener Warmluft, in der Fachsprache Zapfluft, aus dem Inneren der Struktur her anzublasen. Der Temperaturübergang auf die Vorflügel ist von den thermodynamischen Strömungsverhältnissen und meterologischen Bedingungen in Abhängigkeit der Flughöhe, Außentemperatur, Fluggeschwindigkeit, Tröpfchengröße, lateralen Wolkenausdehnung, Wassergehalt etc. gegeben. Unter Berücksichtigung dieser Parameter wird die Effizienz eines Warmluftenteisungssystems auf ca. 30%-40% abgeschätzt. Diese Technik zeichnet sich durch eine hohe Leistungsentnahme und hohe Verluste in der Verrohrung auf dem Weg zum gefährdeten Bereich aus. In der Luftfahrttechnik, insbesondere in der modernen Triebwerkstechnologie ergeben sich Einschränkungen in der Entnahme von ausreichend heißer Warmluft aus den Mantelstromtriebwerken, so daß Warmluft nicht mehr beliebig entnommen werden kann.

Eine andere Technik ist das Verlegen von metallischen Netzen/Heizmatten in der Wand oder auf der Innenwand solcher Strukturen, in denen mit elektrischem Strom, also ohmsches Beheizen, solche Flächen nach Bedarf erwärmt oder warmgehalten werden. Das verlangt aufgrund des hohen Leitungsbedarfs das Verlegen von elektrischen Zuleitungen großen Querschnitts vom Bordgenerator bis zu den Anschlußleisten der Netze. Eine homogene Erwärmung, d.h. das Vermeiden lokaler Überhitzungen insbesondere in der Nähe der Kontaktleisten ist bei einer flächigen Bestromung stets ein Problem, dem sehr sorgfältige Aufmerksamkeit geschenkt werden muss, abgesehen vom erfahrungsgemäß schlechten Wärmetransport zur Problemfläche.

In der DE 197 45 621 C1 wird ein Enteisungsverfahren beschrieben, bei dem zu enteisende Flächen eine Dünnschicht mit hydrophoben Eigenschaften aus diamantartigem Kohlenstoff/ amorphem Kohlenwasserstoff haben, die bei Auftritt einer Eisbildung mit einer äußeren Infrarotstrahlungsquelle bestrahlt oder durch eine in der Fläche liegenden Heizmatte aufgeheizt und dadurch angeregt und erwärmt werden.

In der DE 197 50 198 C2 wird eine Technik zur Enteisung von Flugzeugen mit Millimeterwellen beschrieben, die von einer zentralen, vom Enteisungsbereich weit entfernten Quelle im Flugzeugrumpf gespeist wird. Vereisungsgefährdete, strömungstechnisch bedeutsame Zonen am Flugzeug bestehen aus Verbundwerkstoffen deren dielektrische Bereiche für Millimeterwellen oberhalb 20 GHz gut durchlässig sind. Zur Führung der Millimeterwellen taugliche Hohlleiter, vergleichbar der heutigen Warmluftverrohrung, werden von einer Millimeterwellenquelle im Flugzeugrumpf bis an diese Zonen im Innern herangeführt, wo dann die Millimeterwelle auskoppelt und diese Zone durch Aufwärmung des Dielektrikums eisfrei hält oder durch Erwärmung der Grenzschicht der eventuell schon anliegenden Eisschicht diese rasch davon wieder befreit.

In der WO 98/01340 ist ein Verfahren und ein System für die Enteisung von Flugzeugtragflächen aus Verbundwerkstoffen beschrieben. Um Vereisen von Windmühlenflügeln aus Verbundwerkstoffen zu vermeiden, wird Mikrowellenenergie zur Erwärmung des Verbundwerkstoffes benutzt. Diese Energie wird von Mikrowellengeneratoren geliefert, die im Innern montiert sind und im Falle der Vereisungsgefahr durch das Auftreten klimatischer Bedingungen für die Vereisung eingeschaltet werden. Die Flügeloberfläche kann stellenweise mit einer mikrowellenreflektierenden Schicht bedeckt sein, wodurch sich die Mikrowelle auch durch Reflexion in den Flügelkammern fortpflanzt/ausbreitet. Zum ausgewählten Heizen können mehrere Generatoren kleinerer Leistung benutzt werden. Die Generatoren sind Magnetrone, wie sie aus der Haushaltsmikrowellenherdtechnik bekannt sind, die mit einer Frequenz von 2,45 GHz abstrahlen. Das entspricht einer Freiraumwellenlänge von 12,25 cm. Mit dieser Ein richtung können keine Wellenfronten eingestellt werden, die meteorologisch exponierten Kanten/Flächenbereiche gleich- oder wenigstens nahe kommen, zum einen wegen der großen Wellenlänge, zum andern wegen der Anordnung des oder der Mikrowellengeneratores/n.

Im Leichtkörperbau setzt sich mehr und mehr der Aufbau von Hohlkörper- oder Schalenstrukturen durch Prepreg, CFK- und GFK-Kompositteile durch. Allerdings besitzen solche Verbundwerkstoffe, wenn auch sehr formstabil/-steif und damit mit hoher mechanischer Festigkeit/ und Zähigkeit versehen, bei eine im Vergleich zu Metall sehr schlechte, anisotrope thermische Leitfähigkeit mit der Gefahr der Bildung von Wärmestaus und Überhitzung und damit der Gefahr der lokalen Delamination beim Anblasen mit heißer Luft, bzw. die Flugsicherheit betreffende starke Beschränkung der Möglichkeit, ausreichende Flächenleistungsdichten an der strömungszugewandten, potentiell eisbehafteten Fläche einbringen zu können.

Der Erfindung liegt die Aufgabe zugrunde, ein kompaktes, dezentrales Enteisungssystem für Hohl- oder Schalenkörperstrukturen, die der äußeren Luftanströmung in der Atmosphäre ausgesetzt und damit vereisungsgefährdet sind, zu entwickeln.

Die Aufgabe wird durch ein millimeterwellentechnisches System gemäß dem Oberbegriff des Anspruchs 1 und dessen kennzeichnenden Merkmalen gelöst. Hierzu wird mindestens eine über Puls-Breiten-Regelung in ihrer Leistungsabgabe steuerbare Millimeterwellenquelle im Innern der Hohl-/Schalenkörperstruktur unter Berücksichtigung der am Millimeterwellenausgang angeflanschten Auskoppeleinrichtung unmittelbar oder in nächster möglicher Nähe hinter der vereisungsgefährdeten oder eisfrei zu haltenden Außenfront aufgestellt. Die mechanisch stabilen Hohl-/Schalenkörperstrukturen bestehen einerseits aus CFK-Material oder andrerseits aus GFK-Material oder Prepreg-Verbundmaterial sind eine Zusammensetzung aus beiden. Die äußere Oberfläche der Struktur besteht aus einem Metallfilm bzw. einer Metallhaut, zumindest ist die strömungstechnisch exponierte Außenfläche mit einer solchen überzogen, die dann mit angrenzenden metallischen Strukturen/Flächen an ihrem Rand durchgehend verbunden ist, so dass diese Hohl- oder Schalenkörper millimeterwellen- bzw. hochfrequenzdicht ist und keine elektromagnetische Abstrahlung in den Außenraum ermöglicht.

Über die Auskoppelstruktur strahlt die Millimeterwelle entlang der zu erwärmenden Front ein und erwärmt das angestrahlte Verbundmaterialvolumen. In diesem richtet sich nach Inbetriebnahme ein abfallender Temperaturgradient zur Außenhaut ein. Die Millimeterwelle strahlt regelbar bis zu einer solchen Leistung ein, dass einerseits an jedem Ort des bestrahlten Verbundwerkstoffvolumens ein temperaturmäßiger Sicherheitsabstand zwischen 35 und 75°C zur Delaminationstemperatur von T_{DL} ≈ 130°C des Verbundwerkstoffs aufrechterhalten werden kann und andrerseits an der Schnittfläche zur Metallhaut eine thermische Flächenleistungsdichte bis zu 46 kW/m² besteht, mit der anhaftendes Eis an seiner Grenzschicht zur Struktur hin aufgetaut werden kann und sich damit ablöst oder von der Luftströmung vollends abgerissen wird.

Die Auskoppelstruktur der Auskoppeleinrichtung ist ein an die Millimeterwellenquellen angeflanschter Hohlleiter, der zur Bildung der erforderlichen Millimeterwellenfront entsprechende Auskoppelöffnungen in unterschiedlich der Größe und Abstand hat, um entlang des Hohlleiters eine gleichbleibende Leistungsauskoppelung zu ermöglichen. Die Abstrahlungscharakteristik ist derart beschaffen, dass entlang der Flügelkontur möglichst weitgehend gleiche Phasenfronten anliegen, deren Amplitudenbelag die lokale erforderliche Enteisungsflächenleistung bereitstellt. So können in der Flügelnase weitaus höhere bis 60kW/m² Flächenleistungsdichten wünschenswert sein, in den rückwärtigen Bereichen liegen die Anforderungen bis zum Faktor 10 niedriger (Anspruch 2).

Zum Schutz der Millimeterwellenquellen sind diese in Ihrer Durchgangs- und Sperrdämpfung über Zirkulatoren abgeschlossen (Anspruch 3).

Je nach maximal geforderter Millimeterwellenleistung sind die Millimeterwellenquellen typengleiche Klystrone oder Magnetrone oder "Extended Interaction Oscillators", EIO's, (Anspruch 4).

Die Millimeterwellenleistung tritt dämpfungsarm an der Auskoppeleinrichtung aus und erwärmt die umgebende Schalenstruktur, die als dissipativer Resonator sehr niedriger Güte wirkt, selektiv. Daher ist der Hohl- oder Wellenleiter mit Auskoppeleinrichtung aus einem elektrisch gut leitenden Metall oder aber, falls Gewichtseinsparungen das erfordern aus Verbundwerkstoff, der von einem millimeterwellendichten Metallnetz ummantelt oder damit ausgelegt ist (Ansprüche 5 und 6).

Ein solches millimeterwellentechnisches Enteisungssystem kann sich in eisfrei zu haltenden Einrichtungen/Aufbauten eines Schiffes oder eines Zuges oder eines Straßenverkehrsmittel oder sonstigen, mit allen meteorologischen Bedingungen fertig zu werdenden Hohlkörperstruktur befinden (Anspruch 7).

Sicherheitstechnisch springt die Bedeutung eines solchen Enteisungssystems in der Luftfahrttechnik ins Auge. Flugzeuge und Helikopter benötigen unbedingt aerodynamisch geeignete Gestalt, insbesondere für den Auftrieb und die Steuerung verantwortliche Strukturen wie Tragflächen, Seiten- und Höhenruder und der Rand des Triebwerkseinlasses (Ansprüche 8 bis 11).

Bei größeren Flugzeugen, die im auftriebsrelevanten Bereich der angeströmten Tragfügelfronten sogenannte Vorflügel aufweisen, ist ein zuverlässig wirkendes Enteisungssystem für die stete Flugsicherheit unerläßlich (Anspruch 12).

Ein weiter wichtiges Einsatzfeld ist die Energieerzeugung mit Windkraftanlagen, die riesige Rotorblätter haben und sich ständig Bodenwetterlagen ausgesetzt sind. Um an den Rotorblättern Vereisung zu verhindern, sitzt die Millimeterwellenquelle im Zentrum des Flügelrades, von der aus dann je ein Hohlleiter mit Auskoppelstruktur in den Flügel zu den vereisungsgefährdeten Fronten hineinreicht (Anspruch 13).

Die millimeterwellentechnischen Baukomponenten sind unmittelbar am Wirkungsort. Die Millimeterwellenquellen eines Systems werden über lediglich ein Netzgerät versorgt, so dass ein Enteisungssystem zur Stromversorgung nur mit einer Zuleitung angefahren werden muss, hinzu komm lediglich noch Steuerleitungen für Überwachung und Steuerung. Lange Hohl- bzw. Wellenleiterführungen entfallen.

Mit dem millimeterwellentechnischen Enteisungssystem wird eine Steigerung der Flugsicherheit durch hohe Geschwindigkeit des De-/Anti-Icing Systems erreicht. Im sog. Routine Anti-Icing Betrieb ist ein niedriger Leistungsbedarf erforderlich. Zudem sind auftretende Vereisungsbedingungen beherrschbar, die konventionell nicht angegangen werden können.

Durch die Verwendung von Verbundwerkstoffen für den Vorflügel werden substantielle Gewichtseinsparungen von über 30 % gegenüber der heutigen Metallbauweise erreicht. Neben der prioritären Sicherheit wird dadurch die Wirtschaftlichkeit durch Gewichtseinsparung, bzw. Treibstoffeinsparung erheblich gesteigert. Zudem kann am Boden der Einsatz der mit Unsicherheiten behafteten und die Umwelt stark belastenden Enteisungsflüssigkeit reduziert, eigentlich vermieden werden.

Die Millimeterwellentechnologie senkt signifikant die auftretenden Temperaturen in der laminierten Struktur im Vergleich zur konventionellen Enteisung mit Warmluftanblasen, daher sind weitaus höhere Flächenleistungen für bestimmte Enteisungssituationen an der Außenhaut ermöglicht, bzw. in jedem Fall ein das Verbundmaterial und die Struktur thermisch nicht belastender Betrieb die Regel. Selbst heute von den bestehenden Systemen nicht bewältigbare anhaftende Klareissituationen werden ohne Gefahr der Überhitzung/Delamination des Verbundwerkstoffes beherrscht.

Im Falle der Vorflügelenteisung beispielsweise entfallen geführte Metallrohrleitungen in der Tragfläche sowie Piccolorohrsysteme, wie sie heute für das Warmluftanblasen installiert sind. Das bringt weitere erhebliche Gewichtseinsparungen. Darüber hinaus ist der Vorflügel als Modul für technische Wartung am Flughafen leicht austauschbar - ein Vorteil im zeitlichen Reparaturablauf.

Der Ausfall eines Enteisungsvorflügels führt alles in allem nur zu einer geringen Einbuße in der Leistungsfähigkeit, da die autarken, übrigen Vorflügelsysteme von dem Ausfall eines Systems nicht betroffen sind und unabhängig weiterarbeiten - Redundanz. Beim konventionellen System muss über eine Notversorgungsleitung Warmluft von der anderen Tragfläche abgezogen werden, was zu einer erheblichen Leistungsbeeinträchtigung des Gesamtenteisungssystemes führt.

Es ist hier hervorzuheben, dass die gesamte elektrische Leistung zu 100% in wirkende Enteisungsleistung umgesetzt und an die metallische Vorflügelaußenhaut abgeführt wird.

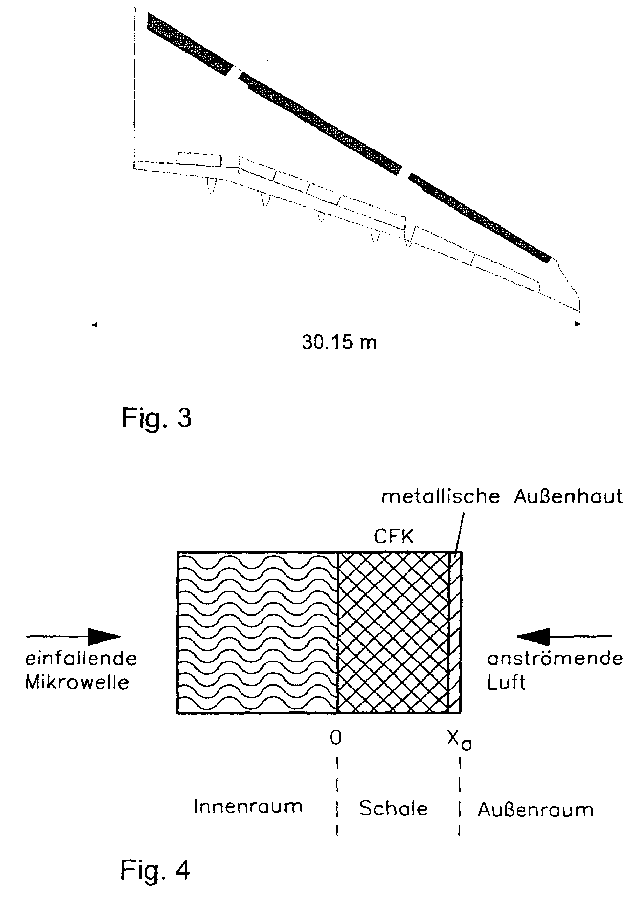

Entlang der Vorflügelkontur sind stark unterschiedliche Flächenleistungsdichten erforderlich; der höchste Bedarf liegt an der Flügelnase selber. Um, wie in der Fliegersprache ausgedrückt wird, Runback Vereisung: von der Vordernase nach hinten rutschende und wieder anfrierende Eismassen, zu verhindern, muss auch der rückwärtige Teil des Vorflügels erwärmt werden. Der erforderlichen Verteilung entsprechend wird ein Feldbelag entlang der Vorflügelkontur durch eine millimeterwellentechnisch optimierte Hohlleiterauskopplung mit entsprechender Abstrahlcharakteristik erzeugt (optimale Leistungsanpassung an die Vorflügelgeometrie, siehe Figur 4).

Das gesamte System ist, millimeterwellentechnisch gesehen, geschlossen und elektromagnetisch versiegelt. Das CFK/Kompositmaterial ist von einer schirmenden metallischen Haut, die primär ihre Bedeutung als Blitzschutz aufweist, umgeben. Es dringt keine Feldwirkung aus dem Vorflügelsystem nach außen. Die Geschlossenheit des Vorflügels - Warmluft benötigt Austrittskanäle - hat aerodynamisch insbesondere noch den Vorteil, weitgehende laminare Strömungsverhältnisse an der Grenzschicht einstellen zu können und störende Wirbelbildung zu vermeiden.

Das Millimeterwellenenteisungssystem ist Puls-Breiten-geregelt betreibbar, so dass Vereisung profilaktisch von kleiner Wärmeleistungsanforderung bis hin zur Klareisentfernung mit höchster Wärmeleistungsanforderung beherrscht wird.

Das millimeterwellentechnische Enteisungssystem arbeitet verlustfrei, die dem Netz entnommene Leistung und in der Auskoppeleinrichtung geführten Millimeterwelle wird vollständig zur Enteisung bzw. Eisfreihaltung umsetzt. Die Leistungsfähigkeit eines solchen Systems tritt noch deutlicher hervor, weil bei eingetretener Vereisung in kurzer Zeit das Eis von der exponierten Oberfläche durch Antauen der Grenzschicht abgelöst werden kann.

Das millimeterwellentechnische Enteisungssystem, das aus mindestens einer der im folgenden dargestellten Einheit besteht, wird anhand der Zeichnung näher erläutert. Die Zeichnung besteht aus fünf Figuren. Es zeigt:
Figur 1 den schematischen Aufbau der Enteisungseinrichtung,
Figur 2 den Schnitt durch den Vorflügel und vorderen Tragflächenbereich,
Figur 3 den Situation an der Tragfläche,
Figur 4 einen Ausschnitt aus der Hohlraumstruktur,
Figur 5 den Temperaturverlauf durch die Hohlraumwand,

Das millimeterwellentechnische Enteisungssystem ist vielfältig und weitläufig verwendbar. Neben dem Einsatz zu Lande und auf dem Wasser wird seine Bedeutung in der Luftfahrt am eindrücklichsten. Es wird daher am Beispiel des Einbaus in den Vorflügel einer Flugzeugtragfläche im folgenden weiter erläutert.

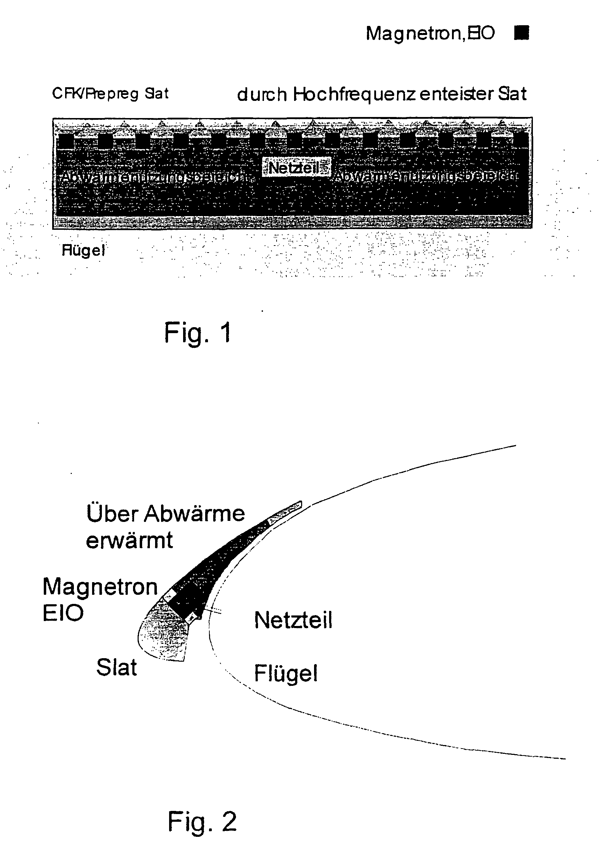

Figur 1 zeigt den Längsschnitt durch einen der Vorflügelabschnitte, wie sie in Figur 4 durch die graue Unterteilung der Anströmkante einer Flugzeugtragfläche angedeutet sind. Im Vorflügelinnern ist parallel zur Anströmkante des Vorflügels aus CFK-Material (Prepreg Slat) die rohrförmige Auskoppeleinrichtung/Hohlleiter für die Millimeterwelle montiert. Die resultierende Wellenfront wird durch die aus den Auskoppelöffnungen entlang des Hohlleiters ausgekoppelten Einzelwellen durch Überlagerung erzeugt. Hier sind Hohlleiter und Auskoppeleinrichtung eins und direkt an die 13 in Reihe liegenden Millimeterwellenquellen, die Magnetrone sind, angeflanscht. Die Querschnittssituation im vorderen Tragflächenbereich zeigt Figur 2. Das Enteisungssystem befindet sich in einer Kammer des Vorflügels, siehe Draufsicht in Figur 1.

Der Vorflügel, siehe Figur 3, ist insgesamt ein geschlossener Innenraumraum, auch die Kammern darin sind abgeschottete Innenräume. Sie können einfach millimeterwellentechnisch dicht gemacht werden, was für das System Flugzeug von Bedeutung ist, da ja nicht unkontrolliert die ganze Flugzeugelektronik beeinflusst werden darf. Im Bereich der Anströmfront herrscht gewollt große Wärmeeinwirkung, die in Strömungsrichtung abnimmt und in der erforderlichen Form vorhanden ist. Zusammen mit der Wärmeentwicklung durch die Wärmeerzeugung im CFK-Material selber und durch den Betrieb der Millimeterwellenquelle wird der gesamte Vorflügel derartig auf Temperatur gehalten, dass sich ein Eisansatz auf der Außenfläche auch nicht bei Anwesenheit extrem unterkühlter Wassertropfen, sog. super cooled droplets, ausbilden kann.

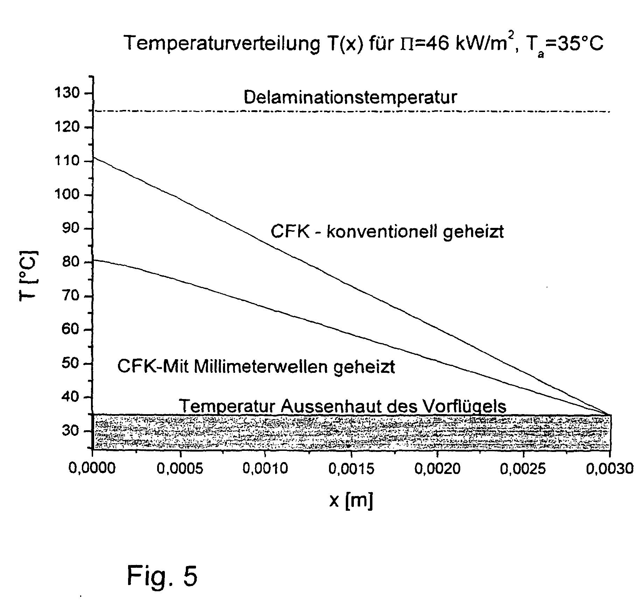

In Figur 5 ist eine Betriebsweise mit ihrer thermischen Auswirkung in der Wand des Vorflügels in der Anströmfront dargestellt. In dem Schaubild wird bei einer Vorflügelgeometrie die konventionelle Heizung, Wärmeeinbringung mit Warmluftanblasen der Innenwand, - gerade Linie im jeweiligen Schaubild, "CFK konventionell geheizt", und die CFK-Aufwärmung mit Millimeterwelle, "CFK Millimeterwellenbeheizt", verglichen. Die Wand der Vorflügel-Hohlkörperstruktur ist im Bereich der Anströmung 3 mm dick. Die Wand besteht im wesentlichen aus dem CFK-Material und der dünnen unmittelbar aufliegenden metallischen Außenhaut aus Aluminium. Im Diagramm von Figur 5 ist die Delaminationstemperatur von 130°C des CFK-Materials als strichpunktierte, waagerechte Linie eingetragen, die Erwärmungsproblematik mit konventioneller Erwärmung vergleichend hervorhebt. Bei der Aufwärmung der Metallhaut auf 25 bis 35°C muss mit einer Warmlufttemperatur von etwa 110°C die CFK-Innenwand des Vorflügels angeblasen werden, um in der Aluminiumhaut dieselbe Temperatur zu erzeugen, wie wenn mit der Millimeterwellenerwärmung an der Oberfläche der Innenwand etwa 80°C hervorgerufen werden. Bei der konventionellen Aufheizung kommt man der Delaminationstemperatur T_{DL} bis auf nahezu 20°C nahe, d.h. das angeblasene CFK-Material kommt an der inneren Oberfläche der Delamination mit wenig Spielraum, also gefährlich nahe. Da beim Warmluftanblasen mit einer homogenen Wärmeeinwirkung nicht gerechnet werden kann, ist mit lokaler Delamination zu rechnen.. Die Millimeterwellenerwärmung bleibt bei diesem Belastungsfall immer noch 50°C unterhalb dieser gefährlichen Delaminationstemperatur, d.h. es besteht ein beachtlicher Sicherheitsabstand. Messungen zeigen, dass im CFK-Strukturmaterial keine Überhitzungsstellen, sog, hot spots, erzeugt werden.

Mit dem Millimeterwellensystem können also Einwirkungsbereiche enteist und eisfrei gehalten werden, ohne das die Leichtbauverbundmaterialien Temperaturen ertragen müssen, die eine Zerstörung der Struktur, wenn auch nur lokal, nach sich ziehen würde. Mit der Millimeterwellenerwärmung wird gerade noch eine Maximaltemperatur in der CFK-Wand von etwas über 80°C erreicht, also keinerlei thermische Belastung des CFK-Materials durch die Erwärmung mit Millimeterwelle der Wellenlänge ≥ 20 GHz.

Im Diagramm tritt bei Erwärmung mit der Millimeterwelle eine höhere Temperatur in der Nähe der inneren Oberfläche im Wandinnern auf. Das ist auf den volumetrischen Heizungseffekt der auf des CFK-Volumen einwirkenden Millimeterwelle zurückzuführen und kehrt damit die wesentlich erhöhte Erwärmungseffizienz gegenüber herkömmlichen Erwärmungstechniken hervor.

Die signifikanten Temperaturerniedrigungen bei Verwendung von Millimeterwellen im Vergleich zur konventionellen Erwärmung bei sonst gleichen Betriebs- und Leistungsanforderungen sind darauf zurückzuführen, dass ein instantaner volumetrischer Leistungseintrag durch die Beaufschlagung im ersten Drittel des Laminates durch Penetration der Welle erfolgt, und die Leistung dort ohne die Notwendigkeit eines wärmeleitungsabhängigen Gradientriebes eingebracht wird. Von dort fließt die eingebrachte Leistung über Wärmeleitung zur Außenhaut. Durch die Volumenheizung sind zudem sehr hohe Heizraten möglich, um die Vorflügelaußenhaut auf die entsprechende Abtautemperatur und erforderliche Flächenleistungsdichte zu bringen. Das zeigt eine hohe Dynamik für alle eventuellen Situationen.

## Patentansprüche

1. Formstabile Hohlraumstrukturen oder schalenartige Strukturen mit einem eingebauten kompakten millimeterwellentechnischen System zum Enteisen und/oder Vorbeugen einer Vereisung an der äußeren, meteorologischen Einflüssen ausgesetzten Oberfläche,
wobei:
die Wände der Hohlraumstrukturen aus ausgehärteten, thermoplastischen oder duroplastischen Verbundwerkstoffen mit dielektrischen Eigenschaften, ggf. in Kombination mit anderen Werkstoffen wie Schäumen, deren Fasergebilde aus Kohlenstofffasern, Glasfasern, Polymerfasern, Polyamidfasern, Polyethylenfasern oder Aramidfasern sind und an den äußeren, meteorologischen Einflüssen ausgesetzten Oberflächen mit einer metallischen Haut als Blitzschutz überzogen sind, und
das millimeterwellentechnischen System aus mindestens einer Millimeterwellenquelle besteht, die in ihrer Leistung steuerbar, gepulst oder kontinuierlich betrieben, im Frequenzbereich ≥ 20 GHz abstrahlt,
**dadurch gekennzeichnet, dass**:
zumindest die vereisungsgefährdete Front der jeweiligen Struktur einen laminierten Aufbau hat, der aus einem Formkörper als Trägerstruktur aus dielektrischem Verbundmaterial einer der Beanspruchung angepassten Schub-, Druck und Biegefestigkeit besteht, und die metallischen Außenhaut, die der anströmenden Luft unmittelbar ausgesetzt ist, in Verbindung mit anderen anstoßenden oder unmittelbar angrenzenden Baustrukturen mit metallischer Oberfläche elektrisch leitend verbunden ist, so dass ein metallisch umschlossener Hohlraum/Kammer besteht,
im Hohlraum oder in Kammern eines jeden solchen Formkörpers mindestens ein für sich alleine betreibbares Millimeterwellensystem eingebaut ist, das aus mindestens einer Millimeterwellenquelle mit Netzteil und Auskoppeleinrichtung aus Hohlleiter und Auskoppelstruktur besteht,
die Auskoppelstruktur im Innern des Formkörpers entlang zur äußeren Anströmfront derart aufgestellt ist, dass die ausgekoppelte Millimeterwelle innen entlang dieser mit einer Wellenfront oder nahezu mit einer Wellenfront auf die freie innere Oberfläche des Verbundmaterials auftrifft, in es penetriert und den dortigen Frontbereich des Verbundmaterialvolumens durch die Millimeterwelleneinwirkung über Volumenheizung derartig erwärmt, dass das Verbundmaterial einerseits unter der Einwirkung der Millimeterwelle an jeder Stelle weit unterhalb der Delaminationstemperatur von etwa 130°C des Verbundmaterials bleibt und andererseits an der Schnittfläche Formkörper/Metallhaut eine vorgegebene Flächenleistungsdichte bis über 60 kW/m² bei anhaftendem Klareis gefahrlos bestehen kann, die die Metallhaut auf einer vorgebbaren, den meteorologischen Anforderungen entsprechenden Temperatur von +10°C bis +70°C und Abtaugeschwindigkeit hält, bei der es auf der luftangeströmten Front bei eingeschaltetem Millimeterwellensystem mit Sicherheit zu keiner Eisbildung kommt oder angesetztes Eis an der Anströmfront an der Berührfläche mit Einschalten des Millimeterwellensystem an-/abgetaut.

2. Formstabile Hohlraumstrukturen oder schalenartige Strukturen mit einem eingebauten kompakten millimeterwellentechnischen System nach Anspruch 1, **dadurch gekennzeichnet, dass** die Auskoppelstruktur aus dem an die mindestens eine Millimeterwellenquelle oder die Millimeterwellenquellen angeflanschten Hohlleiter besteht, der entlang seiner Mantelfläche, zur Anströmkante gerichtete Auskoppelöffnungen hat, aus denen jeweils Wellen auskoppeln, die sich zu der geforderten Wellenfront überlagern.

3. Formstabile Hohlraumstrukturen oder schalenartige Strukturen mit einem eingebauten kompakten millimeterwellentechnischen System nach Anspruch 2, **dadurch gekennzeichnet, dass** die Millimeterwellenquelle/n über Zirkulatoren in ihrer Durchgangs- und Sperrdämpfung mit der millimeterwellenankoppelnden Verbundstruktur als Verbraucher angepasst abgeschlossen ist/sind.

4. Formstabile Hohlraumstrukturen oder schalenartige Strukturen mit einem eingebauten kompakten millimeterwellentechnischen System nach Anspruch 3, **dadurch gekennzeichnet, dass** die monochromatisch gleichartig abstrahlenden Millimeterwellenquellen, orientiert an der abzugebenden Leistung im vorgesehenen Frequenzbereich, Klystrone oder ein Magnetrone oder Extended Interaction Oscillators, EIO, sind.

5. Formstabile Hohlraumstrukturen oder schalenartige Strukturen mit einem eingebauten kompakten millimeterwellentechnischen System nach Anspruch 4, **dadurch gekennzeichnet, dass** die Hohlleiter und Auskoppelstrukturen elektrisch gut leitende, metallische Wände haben.

6. Formstabile Hohlraumstrukturen oder schalenartige Strukturen mit einem eingebauten kompakten millimeterwellentechnischen System nach Anspruch 4, **dadurch gekennzeichnet, dass** die Hohlleiter und Auskoppelstrukturen aus leichtem Aluminium oder auch gewichtsoptimiert aus CFK-Kompositmaterial sind, die jeweils mit einem dünnen Netz aus elektrisch gut leitenden, metallischen Material der Maschenweite ummantelt sind, durch die hindurch die zu leitende Millimeterwelle nicht unerwünscht entfleucht.

7. Formstabile Hohlraumstrukturen oder schalenartige Strukturen mit einem eingebauten kompakten millimeterwellentechnischen System nach den Ansprüchen 4 und 6, **dadurch gekennzeichnet, dass** ein solches System in den Strukturen von vereisungsgefährdeten, von der Luft angeströmten und von Gischt besprühten Fronten eins Schiffes befindet.

8. Formstabile Hohlraumstrukturen oder schalenartige Strukturen mit einem eingebauten kompakten millimeterwellentechnischen System nach den Ansprüchen 4 und 6, **dadurch gekennzeichnet, dass** ein solches System in wenigstens einer der aerodynamisch wichtigen Strukturen von der Luft angeströmten, eisfrei zu haltenden Fronten eines Fluggerätes, wie eines Flugzeugs oder eines Helikopters, befindet.

9. Formstabile Hohlraumstrukturen oder schalenartige Strukturen mit einem eingebauten kompakten millimeterwellentechnischen System nach Anspruch 8, **dadurch gekennzeichnet, dass** sich ein solches System in den für den Auftrieb relevanten Bereichen in den Tragflächen hinter den angeströmten Fronten befindet.

10. Formstabile Hohlraumstrukturen oder schalenartige Strukturen mit einem eingebauten kompakten millimeterwellentechnischen System nach Anspruch 8 oder 9, **dadurch gekennzeichnet, dass** sich ein solches System in den für die Lenkung des Flugzeugs relevanten Bereichen im Höhen- und/oder Seitenruder hinter den angeströmten Fronten befindet.

11. Formstabile Hohlraumstrukturen oder schalenartige Strukturen mit einem eingebauten kompakten millimeterwellentechnischen System nach Anspruch 8 oder 10,
**dadurch gekennzeichnet, dass** sich ein solches System hinter der von Luft angeströmten ringförmigen Front des Triebwerkmantels am Triebwerkseingang befindet.

12. Formstabile Hohlraumstrukturen oder schalenartige Strukturen mit einem eingebauten kompakten millimeterwellentechnischen System nach Anspruch 9,
**dadurch gekennzeichnet, dass** ein solches System im jeweiligen Vorflügel der Tragflächen eingebaut ist.

13. Formstabile Hohlraumstrukturen oder schalenartige Strukturen mit einem eingebauten kompakten millimeterwellentechnischen System nach Anspruch 9, **dadurch gekennzeichnet, dass** ein solches System in einem Rotorblatt einer Windkraftanlage eingebaut ist.

## Claims

1. Dimensionally stable hollow body structures or shell-like structures incorporating a compact, technical millimetre wave system for de-icing purposes and/or for preventing the formation of ice on an external surface which is exposed to meteorological influences,
wherein:
the walls of the hollow structure are produced from hardened, thermoplastics or thermosetting plastics composite materials with dielectric characteristics, where applicable in combination with other materials such as foams, the fibre structures of which are produced from carbon fibres, glass fibres, polymer fibres, polyamide fibres, polyethylene fibres or aramide fibres, the external surfaces, which are exposed to meteorological influences, being coated with a metallic skin in the form of protection against lightning,
and
the technical millimetre wave system comprises at least one millimetre wave source, which has a power output which is controllable in a pulsed or continuous manner and radiates in a frequency range of > 20 GHz, in that:
at least the front area of the respective structure, which is in danger of icing up, includes a laminated structure, which comprises a moulded body in the form of a carrier structure produced from dielectric composite material with a shear strength, compressive strength and
bending strength which is adapted to the load, and the metallic outer skin, which is directly exposed to the air stream, is connected so as to be electro-conductive in conjunction with other abutting or directly adjacent constructions with metallic surfaces, such that there is a metallically surrounded cavity/chamber,
in the cavity or in chambers of each such moulded body there is incorporated at least one independently operable millimetre wave system, which comprises at least one millimetre wave source with a power supply and an uncoupling device produced from a hollow conductor and an uncoupling structure,
the uncoupling structure is set up in the interior of the moulded body extending along relative to the outer front area facing the air flow in such a manner that the uncoupled millimetre wave contacts the free inside surface of the composite material on the inside along this front area facing the air flow with a wave front or almost with a wave front, penetrates said composite material and heats up the front region of the composite material volume at that location through the effect of the millimetre wave by means of volume heating in such a manner that the composite material, through the effect of the millimetre wave at that position, on the one hand, remains substantially below the delamination temperature of approximately 130°C of the composition material and, on the other hand, a predetermined density by surface of up to in excess of 60 kW/m2 can be maintained without any danger at the interface between moulded body and metal skin with adhering clear ice, said volume heating maintains the metal skin at a predetermined temperature of between +10°C and +70°C corresponding to the meteorological conditions and at a speed of thaw where, when the millimetre wave system is activated, there is reliably no build-up of ice on the front area facing the air flow or such ice that is formed on the front area facing the air flow is defrosted/thawed at the contact face when the millimetre wave system is activated.

2. Dimensionally stable hollow body structures or shell-like structures incorporating a compact, technical millimetre wave system according to claim 1, **characterised in that** the uncoupling structure comprises the hollow conductor, which is flanged to the at least one millimetre wave source or the millimetre wave sources and has uncoupling openings along its surface directed towards the edge facing the air flow, from each of which uncoupling openings waves uncouple and these are superimposed to form the required wave front.

3. Dimensionally stable hollow body structures or shell-like structures incorporating a compact, technical millimetre wave system according to claim 2, **characterised in that** the millimetre wave source/sources is/are blocked via circulators in an adapted manner in its/their transient attenuation and blocking attenuation with the millimetre wave coupling composite structure as consumer.

4. Dimensionally stable hollow body structures or shell-like structures incorporating a compact, technical millimetre wave system according to claim 3, **characterised in that** the millimetre wave sources, which radiate in an identical manner monochromatically, orientated to the power to be output in the frequency range provided, are klystrons or magnetrons or Extended Interaction Oscillators, EIO.

5. Dimensionally stable hollow body structures or shell-like structures incorporating a compact, technical millimetre wave system according to claim 4, **characterised in that** the hollow conductor and uncoupling structures have metallic walls which are highly electro-conductive.

6. Dimensionally stable hollow body structures or shell-like structures incorporating a compact, technical millimetre wave system according to claim 4, **characterised in that** the hollow conductor and uncoupling structures are produced from light aluminium or, in a weight-optimised manner, are also produced from CFK composite material, each being surrounded by a thin net of highly conductive, metallic material with a mesh width through which the millimetre waves to be conducted do not escape in an undesired manner.

7. Dimensionally stable hollow body structures or shell-like structures incorporating a compact, technical millimetre wave system according to claims 4 and 6, **characterised in that** such a system is situated in the structures in the front areas of a ship which are in danger of icing up, are facing the air flow and are subject to spray.

8. Dimensionally stable hollow body structures or shell-like structures incorporating a compact, technical millimetre wave system according to claims 4 and 6, **characterised in that** such a system is situated in at least one of the aerodynamically important structures in the front area of a flying machine, such as an aeroplane or a helicopter, which aerodynamically important structures face the air flow and have to be kept free of ice.

9. Dimensionally stable hollow body structures or shell-like structures incorporating a compact, technical millimetre wave system according to claim 8, **characterised in that** such a system is situated in the regions relevant to the lift in the lifting surfaces behind the front areas facing the air flow.

10. Dimensionally stable hollow body structures or shell-like structures incorporating a compact, technical millimetre wave system according to claim 8 or 9, **characterised in that** such a system is situated in the regions relevant to the steering of the aeroplane in the elevators and/or side rudders behind the front areas facing the air flow.

11. Dimensionally stable hollow body structures or shell-like structures incorporating a compact, technical millimetre wave system according to claim 8 or 10, **characterised in that** such a system is situated behind the annular front area of the engine casing facing the air flow at the air inlet area of the engine.

12. Dimensionally stable hollow body structures or shell-like structures incorporating a compact, technical millimetre wave system according to claim 9, **characterised in that** such a system is installed in the respective slat of the lifting surfaces.

13. Dimensionally stable hollow body structures or shell-like structures incorporating a compact, technical millimetre wave system according to claim 9, **characterised in that** such a system is installed in a rotor blade of a wind power station.

## Revendications

1. Structures creuses indéformables ou structures cupuliformes dotées d'un système compact intégré relevant de la technique des ondes millimétriques pour dégivrer et/ou prévenir la formation de givre sur la surface extérieure exposée aux influences météorologiques,
les parois des structures creuses étant en matériaux composites durcis, thermoplastiques ou en plastique thermodurcissable présentant des propriétés diélectriques, le cas échéant en association avec d'autres matériaux comme les mousses dont les textures fibreuses sont en fibres d'hydrocarbures, en fibres de verre, en fibres de polymère, en fibres de polyamide, en fibres de polyéthylène ou en fibres d'aramide, et étant recouvertes d'une pellicule métallique servant de protection contre la foudre au niveau de leurs surfaces extérieures exposées aux influences météorologiques et
le système relevant de la technique des ondes millimétriques se composant d'au moins une source d'ondes millimétriques dont la puissance est réglable, pulsée ou commandée en continu et qui rayonne dans la plage de fréquences ≥ 20 GHz,
**caractérisées en ce qu'**
au moins le front de la structure correspondante menacé par la formation de givre est doté d'une construction stratifiée composée d'un corps de moulage servant de structure porteuse en matériau composite diélectrique d'une résistance au cisaillement, à la pression et à la flexion conforme aux exigences, et la pellicule extérieure métallique exposée directement aux vents est reliée par conduction électrique à la surface métallique en association avec d'autres structures de montage directement adjacentes ou contiguës de sorte qu'il en résulte une cavité/chambre enveloppée dans une structure métallique,
au moins un système à ondes millimétriques pouvant être actionné en autonomie et étant composé d'au moins une source d'ondes millimétriques avec un bloc d'alimentation et un dispositif de découplage formé d'un guide d'ondes et d'une structure de découplage est monté dans une cavité ou dans des chambres respectivement d'un tel corps de moulage,
la structure de découplage à l'intérieur du corps de moulage est placée le long du front d'attaque extérieur de manière à ce que l'onde millimétrique découplée longe ce front à l'intérieur avec un front d'onde ou quasiment avec un front d'onde en butant contre la surface intérieure libre du matériau composite, qu'elle pénètre dans ce matériau composite et qu'elle réchauffe la zone de front locale du volume du matériau composite par l'action des ondes millimétriques sur le chauffage de volume de telle sorte que sous l'action de l'onde millimétrique, le matériau composite reste d'une part en tout point largement inférieur à la température de clivage d'environ 130°C du matériau composite et qu'une puissance volumique donnée au mètre carré pouvant dépasser 60 kW/m² puisse d'autre part exister sans risque sur l'interface corps de moulage/pellicule métallique en cas de glace transparente adhérente qui maintiendrait la pellicule métallique à une température donnée correspondant aux exigences météorologiques comprise entre +10°C et +70°C et à une vitesse de dégel à laquelle il n'y aurait aucun risque de formation de gel sur le front exposé aux vents lorsque le système à ondes millimétriques est allumé ou à laquelle la glace fixée sur le front d'attaque dégèlerait/dégivrerait sur la surface de contact à l'activation du système à ondes millimétriques.

2. Structures creuses indéformables ou structures cupuliformes dotées d'un système compact intégré relevant de la technique des ondes millimétriques selon la revendication 1,
**caractérisées en ce que**
la structure de découplage se compose du guide d'ondes bridé à au moins une source d'ondes millimétriques ou aux sources d'ondes millimétriques, lequel guide d'ondes est doté le long de son aire latérale d'ouvertures de découplage orientées vers le bord d'attaque et dont sont découplées respectivement des ondes se chevauchant par rapport au front d'ondes formé.

3. Structures creuses indéformables ou structures cupuliformes dotées d'un système compact intégré relevant de la technique des ondes millimétriques selon la revendication 2,
**caractérisées en ce que**
la ou les source(s) d'ondes millimétriques est/sont isolée(s) par des circulateurs au niveau de leur amortissement de transmission ou de leur affaiblissement du blocage en étant adaptée(s) en tant que dissipateur à la structure composite couplée aux ondes millimétriques.

4. Structures creuses indéformables ou structures cupuliformes dotées d'un système compact intégré relevant de la technique des ondes millimétriques selon la revendication 3,
**caractérisées en ce que**
les sources d'ondes millimétriques rayonnant de manière identique de manière monochromatique et étant orientées sur la puissance devant être dégagée dans la plage de fréquences donnée, sont un klystron ou un magnétron ou encore des Extended Interaction Oscillators (EIO).

5. Structures creuses indéformables ou structures cupuliformes dotées d'un système compact intégré relevant de la technique des ondes millimétriques selon la revendication 4,
**caractérisées en ce que**
les guides d'ondes et les structures de découplage comportent des parois métalliques présentant de bonnes propriétés de conduction électrique.

6. Structures creuses indéformables ou structures cupuliformes dotées d'un système compact intégré relevant de la technique des ondes millimétriques selon la revendication 4,
**caractérisées en ce que**
les guides d'ondes et les structures de découplage respectivement enveloppés d'un réseau fin en matière métallique de mesh à bonne conduction électrique que ne traverse pas de manière non souhaitée l'onde millimétrique à guider sont en aluminium léger ou, pour optimiser leur poids, en matière composite de plastique chargé à fibres artificielles.

7. Structures creuses indéformables ou structures cupuliformes dotées d'un système compact intégré relevant de la technique des ondes millimétriques selon les revendications 4 et 6,
**caractérisées en ce qu'**
un système de ce type se trouve dans les structures des fronts d'un bateau risquant de givrer, exposés aux vents et aspergés d'embruns.

8. Structures creuses indéformables ou structures cupuliformes dotées d'un système compact intégré relevant de la technique des ondes millimétriques selon les revendications 4 et 6,
**caractérisées en ce qu'**
un système de ce type se trouve dans au moins l'une des structures importantes sur le plan aérodynamique des fronts d'un appareil volant, comme d'un avion ou d'un hélicoptère, exposés aux vents et à libérer de toute formation de givre.

9. Structures creuses indéformables ou structures cupuliformes dotées d'un système compact intégré relevant de la technique des ondes millimétriques selon la revendication 8,
**caractérisées en ce qu'**
un système de ce type se trouve derrière les fronts exposés aux vents dans les zones pertinentes pour la force ascensionnelle dans les surfaces portantes.

10. Structures creuses indéformables ou structures cupuliformes dotées d'un système compact intégré relevant de la technique des ondes millimétriques selon la revendication 8 ou 9,
**caractérisées en ce qu'**
un système de ce type se trouve derrière les fronts exposés aux vents dans les zones pertinentes pour la direction de l'avion dans le gouvernail de profondeur et/ou de direction.

11. Structures creuses indéformables ou structures cupuliformes dotées d'un système compact intégré relevant de la technique des ondes millimétriques selon la revendication 8 ou 10,
**caractérisées en ce qu'**
un système de ce type se trouve derrière le front annulaire exposé aux vents de l'enveloppe du groupe moteur sur l'entrée du groupe moteur.

12. Structures creuses indéformables ou structures cupuliformes dotées d'un système compact intégré relevant de la technique des ondes millimétriques selon la revendication 9,
**caractérisées en ce qu'**
un système de ce type est monté dans le bec de bord d'attaque respectif des surfaces portantes.

13. Structures creuses indéformables ou structures cupuliformes dotées d'un système compact intégré relevant de la technique des ondes millimétriques selon la revendication 9,
**caractérisées en ce qu'**
un système de ce type est monté dans une pale de rotor d'une éolienne.
